**Europäisches Patentamt**

**European Patent Office**

**Office européen des brevets**

(19)

(11) Veröffentlichungsnummer : **0 080 640**
**B1**

(12) **EUROPÄISCHE PATENTSCHRIFT**

(45) Veröffentlichungstag der Patentschrift :
04.03.87

(51) Int. Cl.⁴ : **G 01 M  3/24**, G 01 F  1/66,
G 01 F  1/74

(21) Anmeldenummer : **82110529.3**

(22) Anmeldetag : **15.11.82**

(54) **Verfahren und Vorrichtung zum Nachweis von Blasen in einer Flüssigkeit.**

(30) Priorität : **30.11.81 DE 3147421**

(43) Veröffentlichungstag der Anmeldung :
**08.06.83 Patentblatt 83/23**

(45) Bekanntmachung des Hinweises auf die Patenterteilung : **04.03.87 Patentblatt 87/10**

(84) Benannte Vertragsstaaten :
**AT BE CH DE FR GB IT LI LU NL SE**

(56) Entgegenhaltungen :
**DE-A- 3 023 645**
**FR-A- 2 248 497**
**FR-A- 2 358 661**
**GB-A- 2 052 060**
**US-A- 3 834 227**
**US-A- 4 135 395**
**Die Akte enthält technische Angaben, die nach dem Eingang der Anmeldung eingereicht wurden und die nicht in dieser Patentschrift enthalten sind.**

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Arnaoutis, Nicolas, Dipl.-Phys.**
**Schwerinstrasse 3**
**D-5000 Köln 60 (DE)**

(74) Vertreter : **Mehl, Ernst, Dipl.-Ing. et al**
**Postfach 22 01 76**
**D-8000 München 22 (DE)**

EP 0 080 640 B1

## Beschreibung

Die vorliegende Erfindung betrifft ein Verfahren und eine Vorrichtung zum Nachweis von sich in einer Flüssigkeit bewegenden Blasen, insbesondere bei heißen und undurchsichtigen Flüssigkeiten. Bei Volumenstrommessungen und in der Reaktortechnik ist es von besonderer Bedeutung, in einer Flüssigkeit mitgeführte Blasen festzustellen und gegebenenfalls auch ihre Anzahl und Größe zu bestimmen. Zu diesem Zweck sind mehrere Methoden bekannt, beispielsweise Messung der Kompressibilität mit Hilfe von Ultraschall. Nachteile der bisher bekannten Verfahren sind einerseits ein verhältnismäßig großer Aufwand und andererseits die mangelnde Unterscheidungsmöglichkeit zwischen vielen kleinen und wenigen großen Blasen.

Aus der DE-A-3 023 645 ist es beispielsweise bekannt, schalleitende Stäbe in einer Rohrleitung anzuordnen, welche mit einem Schallaufnehmer akustisch gekoppelt sind. Diese Stäbe registrieren die von in der Flüssigkeit vorhandenen Festkörperteilchen, z. B. Sand, erzeugten Geräusche und sind durch spezielle Ausgestaltung der Stäbe und durch Differenzbildung der Signale auch in der Lage, die durch das Vorhandensein von Blasen in der Strömung erzeugten Geräusche zu eliminieren. Diese Anordnung ist jedoch nicht primär zum quantitativen Nachweis oder zum Zählen von einzelnen Blasen geeignet.

Aufgabe der vorliegenden Erfindung ist daher ein einfaches Verfahren zum Nachweis von einzelnen Blasen, insbesondere auch in flüssigem Natrium einer Kernenergieanlage, sowie eine Anordnung zur Durchführung des Verfahrens. Dabei wird von der Erkenntnis ausgegangen, daß Blasen in einer strömenden Flüssigkeit mitgenommen werden, bzw. sich in einer ruhenden Flüssigkeit nach oben bewegen.

Zur Lösung der Aufgabe wird daher ein Verfahren gemäß den kennzeichnenden Merkmalen des Anspruchs 1 vorgeschlagen. Dazu wird in der Blasenbahn ein Hindernis aus schalleitendem Material angebracht gegen welches die Blasen stoßen können. Durch den Stoß einer Blase, genauer wohl durch den Stoß der am Ende einer Blase folgenden Flüssigkeitswand, wird an dem Hindernis ein Schallimpuls erzeugt, welcher auf einen Schallaufnehmer übertragen wird. Dieser Impuls betrifft nicht das Hindernis als Ganzes, sondern breitet sich als Schallwelle entlang der Hindernisstruktur aus und erreicht so den Schallaufnehmer. Die Eigenfrequenz des Hindernisses spielt dafür keine Rolle. Im Schallaufnehmer wird das akustische Schallsignal in ein elektrisches umgewandelt und von einer Auswerteelektronik verarbeitet. Es hat sich gezeigt, daß die durch Blasen erzeugten Schallwellen in ein bestimmtes Frequenzgebiet fallen, wobei die Anzahl der Schallereignisse der Anzahl der Blasen proportional ist, während das Frequenzspektrum und/oder die Impulsformen und-/oder Impulsamplituden etwas über die Größe der Blasen aussagen können.

Im Anspruch 3 wird vorgeschlagen, die erzeugten Signale, welche, wegen ihrer hohen Frequenz für das menschliche Ohr normalerweise nicht hörbar sind, durch Modulation in einen Bereich bis 10 000 Hertz zu bringen und akustisch wahrnehmbar zu machen.

Im Anspruch 4 wird eine Vorrichtung zur Durchführung des Verfahrens vorgeschlagen mit welcher sich auf einfache Weise ein Blasennachweis verwirklichen läßt. Dazu ist in der Blasenbahn ein Hindernis aus schallleitendem Material vorhanden, welches akustisch mit einem Schallaufnehmer gekoppelt ist. Der Schallaufnehmer ist mit einer Auswerteelektronik verbunden, welche Mittel zur Filterung, Analyse und/oder Zählung einzelner durch den Stoß von Blasen gegen das Hindernis erzeugter Schallimpulse enthält.

Daher umfaßt die Auswerteelektronik, wie im Anspruch 2 vorgeschlagen ein Frequenzfilter, welches nur den interessierenden Frequenzbereich durchläßt, sowie Mittel zur Auswertung der Impulsformen oder Impulsamplituden und des Frequenzspektrums. Besonder bietet sich ein Vielkanalanalysator und/oder in Digitaloszilloskop zur genauen Untersuchung an. Diese Maßnahmen bewirken, daß Blasengeräusche von anderen über die Struktur übertragenen Geräuschen und den üblichen Strömungsgeräuschen eines flüssigen Mediums unterschieden werden können.

In den Ansprüchen 5, 6 und 7 werden besondere Ausführungsformen des Hindernisses beschrieben, wobei verschiedene Gesichtspunkte zu berücksichtigen sind. Zunächst einmal muß das Hindernis so gestaltet sein, daß wenigstens ein erheblicher Anteil aller mitgeführten Blasen auch tatsächlich auf das Hindernis trifft. Ansonsten ist die Nachweiswahrscheinlichkeit und -genauigkeit zu gering. Weiterhin muß das Material des Hindernisses gegenüber der Flüssigkeit beständig sein und sollte auch bei höheren Temperaturen seine elastischen und schalleitenden Eigenschaften nicht stark ändern. Andererseits soll die Strömung nicht unnötig behindert werden, weshalb die Fläche des Hindernisses nur einen kleinen Bruchteil der Querschnittfläche z. B. einer Rohrleitung einnehmen sollte. Günstige Ausführungsformen, die diese Bedingungen erfüllen, sind meanderförmige oder gitterförmige Hindernisse, welche ungefähr in einer Ebene senkrecht zur Strömungsrichtung der Blasen angeordnet sind.

Für den Blasennachweis z. B. in Rohrleitungen bei kleinen bis mittleren Rohrleitungsdurchmessernerscheint es vernünftig gemäß dem Anspruch 8, den Schallaufnehmer außerhalb der Rohrleitung anzubringen und durch ein Koppelstück, welches durch eine Dichtung nach außen führt, mit dem Hindernis akustisch zu verbinden. Dadurch wird der Schallaufnehmer auswechselbar und ist nicht so hohen Belastungen durch Temperatur und Korrosion ausgesetzt. Durch unterschiedlich lange Wege auf dem Hindernis je nach Auftreffpunkt einer Blase wird zwar die Amplitude der entstehenden Impulse etwas geschwächt, jedoch bleibt dieser Effekt bei nicht zu großem Durchmesser der Rohrleitungen und guter Konstruktion des Hindernisses unbeachtlich. In Rohren mit besonders großem Querschnitt sollte der Schallaufnehmer aber im Inneren, sinnvollerweise im Zentrum des Hindernisses angebracht werden, wodurch übergroße Laufwege vermieden werden. Der Nachteil dabei ist natürlich, daß der Schallaufnehmer nicht mehr zugänglich ist und sehr widerstandsfähig sein muß.

In den Ansprüchen 9 und 10 werden weitere besondere Eigenschaften des Hindernisses beschrieben, welche insbesondere bei der Anwendung in einer Kernenergieanlage von Bedeutung sind. Aus Gründen der Stabilität und Betriebssicherheit sollte die Eigenfrequenz des Hindernisses im Niederfrequenzbereich liegen, so daß Resonanzen mit akustischen Ereignissen in der Flüssigkeit nicht auftreten. Fernerhin sollte das Hindernis so gestaltet sein, daß der Schall nicht auf zwei gleichwertigen Wegen zum Aufnehmer gelangen kann, damit Interferenzen vermieden werden. Dies kann insbesondere bei der Verwendung von dünnen Drähten als Hindernis von Bedeutung sein.

Im Anspruch 10 wird vorgeschlagen, das Hindernis an mehreren Stellen mit der Rohrleitung zu verbinden, beispielsweise durch Anschweißen. Für flüssiges Natrium bietet sich dabei als Werkstoff austenitischer Stahl an. Ein an mehreren Stellen befestigtes Hindernis kann nicht leicht durch Materialschäden abbrechen und von der Strömung mitgerissen werden. Dies ist insbesondere für den Langzeiteinsatz in den Kühlmittelleitungen eines Reaktors von großer Bedeutung. Für solche Fälle bietet sich ein aus dünnen austenitischen Blechen gefertigtes Gitter an, wie es in der Zeichnungsbeschreibung näher erläutert wird.

Im Anspruch 11 wird die Auswerteelektronik genauer spezifiziert. Sie muß mindestens aus einem Verstärker, einem Frequenzfilter, einem Auswerte- und Anzeigegerät bestehen. Auswerte- und Anzeigegerät können beispielsweise aus einem Vielkanalanalysator bestehen, welcher die registrierten Signale nach Amplitudenhöhe, Impulsform oder Frequenz diskriminiert und anzeigt.

Einige Ausführungsbeispiele der Erfindung sind in der Zeichnung dargestellt und zwar zeigen

Figur 1    den schematischen Aufbau der gesamten Meßaparatur,

Figuren 2, 3 und 4 verschiedene Ausführungsbeispiele für die Gestaltung des im Blasenweg angebrachten Hindernisses und

Figur 5 eine perspektivische Darstellung des Meßgerätes, wenn als Hindernis ein Rost aus dünnen Blechen verwendet wird.

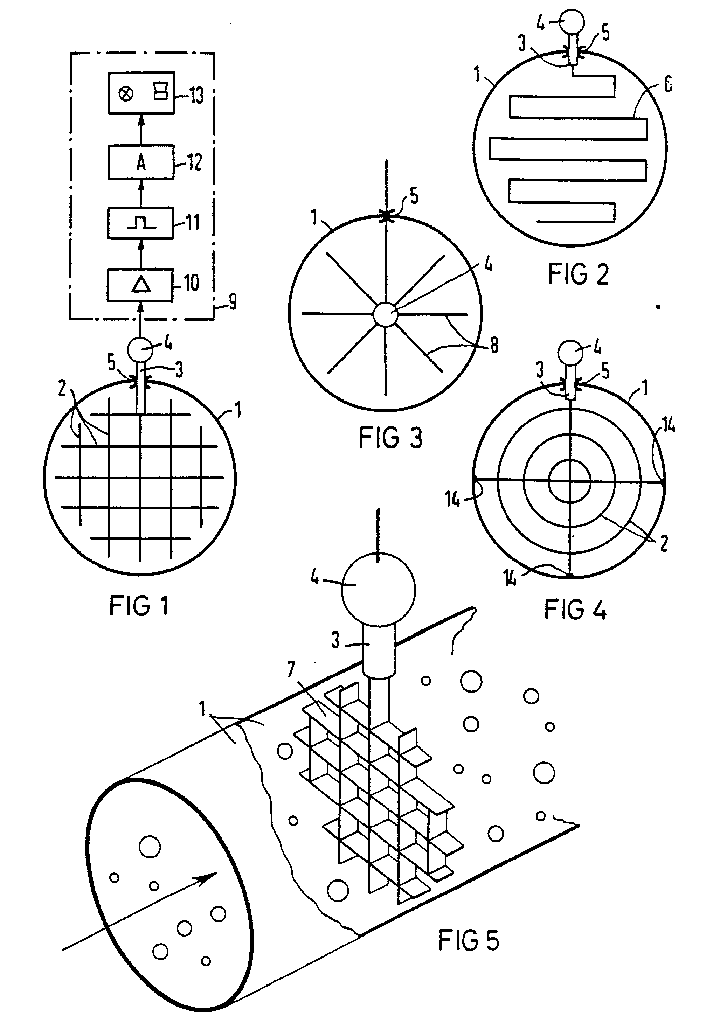

In Fig. 1 ist im Querschnitt ein Behälter oder eine Rohrleitung 1 gezeigt, in welcher sich Blasen in einer Flüssigkeit bewegen. In der Blasenbahn ist ein Hindernis 2 angebracht, gegen welches die Blasen — oder wenigstens ein Teil von ihnen — stoßen können. Dabei werden in dem Hindernis Schallwellen, meist Körperschallwellen, erzeugt, welche über ein Koppelstück 3 an einen Schallaufnehmer 4 weitergeleitet werden. Der Schallaufnehmer 4 wandelt die akustischen in elektrische Signale um und gibt sie weiter an eine Auswerteelektronik 9. Die Auswerteelektronik besteht aus einem Verstärker 10, einem nachfolgenden Frequenzfilter 11, welches nur einen gewünschten Frequenzbereich durchläßt, einem Analysator 12, welcher den durchgelassenen Frequenzbereich genauer analysiert, und einem optischen oder akustischen Anzeigegerät 13. Da das Gerät insbesondere für undurchsichtige und heiße Medien gedacht ist, bestehen Rohr 1 und Hindernis 2 im Normalfall aus Metall, insbesondere austenitischem Stahl. Die Durchführung des Koppelstückes 3 durch das Rohr wird mit einer Dichtung 5 abgedichtet. Je nach den Randbedingungen, wie z. B. Rohrdurchmesser, Strömungsgeschwindigkeit, Medi um, Empfindlichkeit etc. muß das Hindernis 2 unterschiedlich gestaltet werden. Einige Möglichkeiten sind in den folgenden Figuren dargestellt.

In Fig. 2 besteht das Hindernis aus einem mäanderförmig gebogenen Draht oder Blechstreifen 6, welcher ungefähr in einer Ebene senkrecht zur Strömungsrichtung angeordnet ist.

Fig. 3 zeigt ein Beispiel, welches insbesondere für sehr große Rohrdurchmesser geeignet ist. Um auch bei großen Rohrdurchmessern noch einen genügend großen Anteil des Querschnittes der Rohrleitung auf Blasen überwachen zu können, kann es notwendig werden, den Schallaufnehmer innerhalb der Rohrleitung anzuordnen. Dadurch werden die Wege, die der von Blasen erzeugte Schallwellen im Hindernis zurücklegen muß, nicht zu lang und die Dämpfung nicht zu groß. Der Nachteil dieses Ausführungsbeispieles ist, daß der Schallaufnehmer gegen das umgebende Medium und dessen Temperatur resistent sein muß. In der Fig. 3 ist der Schallaufnehmer 4 in der Mitte der Rohrleitung angeordnet und es gehen von ihm sternförmig Drähte oder dünne Bleche nach allen Seiten auseinander, wiederum ungefähr in einer Ebene senkrecht zur Strömungsrichtung. Die elektrischen Signale des Schallaufnehmers werden durch eine Dichtung 5 nach außen an die Auwerteelektronik 9 weitergeleitet. Die Form der vom Schallaufnehmer ausgehenden Drähte oder Bleche 8 kann je nach den Anforderungen variiert werden. So bieten sich gegebenenfalls auch mäanderförmige oder untereinander verbundene Drähte an.

In Fig. 4 ist eine weitere mögliche Form des Hindernisses 2 gezeigt, wobei hier die zusätzliche Möglichkeit veranschaulicht wird, das Hindernis an weiteren Befestigungspunkten 14 mit der Rohrleitung zu verbinden, um eine größere Stabilität und Sicherheit gegen Abreißen zu erreichen. Diese Ausführungsform bietet sich bei größeren Durchmessern und erhöhten Stabilitätsanforderungen an.

In Fig. 5 ist eine perspektivische Darstellung der Meßanordnung gezeichnet, für den Fall, daß das Hindernis 2 die Form eines Gitters 7 aus dünnen Blechstreifen hat. Ein solches Gitter könnte wiederum am mehreren Punkten der Rohrleitung befestigt werden. Wie aus der Zeichnung zu ersehen ist, weist diese Ausführungsform eine erhebliche Stabilität auf, ohne die Strömung wesentlich zu behindern. Dennoch besteht eine große Wahrscheinlichkeit dafür, daß mit der Strömung geführte Blasen gegen das Gitter stoßen und so nachgewiesen werden können.

Der Meßaufnehmer sollte nach Möglichkeit an einem geraden Stück Rohrleitung angebracht werden, da in Rohrkrümmungen, Ventilen und ähnlichen Bauteilen erhebliche Störgeräusche entstehen, welche die Nachweisempfindlichkeit beeinflussen würden. Eine geeignete Ausführung der Dichtung 5 kann aber dazu beitragen, daß Störgeräusche von weiter entfernten Rohrkrümmungen nicht über die Struktur auf den Schallaufnehmer übertragen werden. Zur Erhöhung der Nachweisempfindlichkeit können mehrere Gitter, möglicherweise um bestimmte Winkel gegeneinander versetzt, hintereinander in der Rohrleitung angeordnet werden.

Folgende Daten haben sich für die Ausführung der Erfindung als günstig erwiesen :

Bei Drahthindernissen : Durchmesser der Drähte 0,3-2 mm.

Material : Ferritischer Stahl, Austenit oder Inconell FM 82 Überwachter Frequenzbereich : 0-100 KHz.

Die Blasen erzeugen ein signifikantes Spektrum in diesem Frequenzbereich. Bei der Auswertung von Einzelereignissen läßt sich aus Frequenz und Form der Einhüllenden des Signals ein Rückschluß auf die Größe der Blasen ziehen. Besonders die lange Anstiegsflanke der Einhüllenden ist etwa proportional der Blasengröße. Eine Erkennung von selten auftretenden einzelnen « Riesenblasen » ist ebenfalls möglich, wobei die genauen Merkmale durch Vorversuche und Referenzmessungen ermittelt werden müssen, da Medium, Rohrleitungsdurchmesser, Strömungsgeschwindigkeit etc. eingehen.

Bei sehr hohen Temperaturen läßt sich eine dichte Durchführung des Koppelstückes oft nicht mehr mit Hilfe einer Dichtung erreichen. In diesem Fall kann die Dichtung auch weggelassen werden, wobei dann eine akustische Verbindung durch Anschweißen von Hindernis bzw. Koppelstück an die Strukturwand erzielt werden kann.

**Patentansprüche**

1. Verfahren zum akustischen Nachweis von sich in einer Flüssigkeit bewegenden Blasen, wobei ein in der Flüssigkeit angeordneter schalleitender Gegenstand verwendet wird, der mit einem Schallaufnehmer (4) gekoppelt ist, und wobei die Signale des Schallaufnehmers in einer Auswertelekronik (9) verarbeitet werden, gekennzeichnet durch folgende Merkmale :

a) Der schalleitende Gegenstand wird in der Flüssigkeit als Hindernis (2) im Bereich der Bahnen eventuell vorhandener Blasen angeordnet.

b) Durch den Stoß jeder einzelnen Blase wird an dem Hindernis (2) jeweils ein charakteristischer Schallimpuls erzeugt, welcher in dem Schallaufnehmer (4) jeweils ein elektrisches Signal erzeugt.

c) Die signale des Schallaufnehmers (4) werden von einer Auswertelektronik (9) nach Frequenzspektrum und/oder Amplitude analysiert und/oder gezählt.

2. Verfahren nach Anspruch 1, dadurch gekennzeichnet, daß die von Blasen erzeugten Signale des Schallaufnehmers (4) durch ein frequenzselektives Filter (11) von den durch andere Geräusche erzeugten Signalen getrennt und die Signale der blasenspezifischen Frequenzen weiter ausgewertet werden nach Impulsform, Impulshöhe und Häufigkeit.

3. Verfahren nach Anspruch 1, dadurch gekennzeichnet, daß die erzeugten Signale moduliert und für das menschliche Ohr hörbar gemacht werden.

4. Vorrichtung zum Nachweis von sich in einer Flüssigkeit bewegenden Blasen, mit einem in der Flüssigkeit angeordneten schalleitenden Gegenstand, der akustisch mit einem Schallaufnehmer (4) gekoppelt ist, und mit einer Auswerteelektronik (9) zur Verarbeitung der Signale des Schallaufnehmers, gekennzeichnet durch folgende Merkmale :

a) Der schalleitende Gegenstand ist als Hindernis ausgebildet und im Bereich der Bahnen eventuell vorhandener Blasen so angeordnet, daß zumindest ein Teil der Blasen gegen ihn stoßen kann.

b) Die Auswerteelektronik (9) enthält Mittel zur Filterung, Analyse und/oder Zählung einzelner durch den Stoß von Blasen gegen das Hindernis (2) erzeugter Schallimpulse.

5. Vorrichtung nach Anspruch 4, dadurch gekennzeichnet, daß das Hindernis (2) aus einem oder mehreren Drähten (6) besteht.

6. Vorrichtung nach Anspruch 5, dadurch gekennzeichnet, daß die Drähte (6) mäanderförmig gebogen sind und ungefähr in einer Ebene senkrecht zur Strömungsrichtung der Blasen liegen.

7. Vorrichtung nach Anspruch 4, dadurch gekennzeichnet, daß das Hindernis (2) aus einem Gitter (7) besteht, welches in einer Ebene ungefähr senkrecht zur Strömungsrichtung angeordnet ist.

8. Vorrichtung nach einem der Ansprüche 4 bis 7, für sich in Rohrleitungen oder Behältern bewegenden Blasen, gekennzeichnet durch, folgende Merkmale :

a) Der Schallaufnehmer ist außerhalb der Rohrleitung (1) bzw. des Behälters angebracht.

b) Ein Koppelstück (3) aus schalleitendem Material verbindet den Schallaufnehmer mit dem Hindernis (2)

c) Das Koppelstück (3) führt durch eine Dichtung (5) in der Behälter- bzw. Rohrwand (1).

9. Vorrichtung nach Anspruch 8, dadurch gekennzeichnet, daß das Hindernis an mehreren Stellen (14) mit der Rohrleitung (1) verbunden ist, und aus austenitischem Stahl besteht.

10. Vorrichtung nach einem der Ansprüche 4 bis 9, dadurch gekennzeichnet, daß die Eigenfrequenz des Hindernisses (2) im Niederfrequenzbereich liegt und das Hindernis (2) so gestaltet ist, daß der Schall einer Blase nur auf einem Weg zum Schallaufnehmer (4) gelangen kann.

11. Vorrichtung nach einem der Ansprüche 4 bis 10 dadurch gekennzeichnet, daß die Auswerteelektronik (9) aus hintereinander geschaltetem Verstärker (10), Frequenzfilter (11), Auwerte (12) und Anzeigegerät (13) besteht.

**Claims**

1. A method for the acoustic detection of bubbles which move in a fluid, wherein a sound-conducting objet is used which is arranged in the fluid and which is coupled to a sound receiver (4), and wherein the signals of the sound receiver are processed in an analysing electronics unit (9), characterized by the following features :

a) the sound-conducting object is arranged in the fluid as an obstacle (2) in the region of the paths of possibly present bubbles,

b) by means of the impact of each individual bubble a characteristic sound pulse, which respectively produces an electric signal in the sound receiver (4), is respectively produced at the obstacle (2),

c) the signals of the sound receiver (4) are analysed and/or counted by an analysing electronics unit (9) in accordance with frequency spectrum and/or amplitude.

2. A method as claimed in claim 1, characterised in that by means of a frequency-selective filter (11) the signals of the sound receiver (4) which are produced by bubbles are separated from the signals, which are produced by other noises, and the signals of the bubble-specific frequencies are further analysed in accordance with pulse-shape, pulse level and frequency.

3. A method as claimed in claim 1, characterised in that the produced signals are modulated and rendered audible to the human ear.

4. A device for the detection of bubbles which move in a fluid, comprising a sound-conducting object which is arranged in the fluid and which is acoustically coupled to a sound receiver (4), and comprising an analysing electronics unit (9) for processing the signals of the sound receiver, characterised by the following features :

a) the sound-conducting object is designed as an obstacle and arranged in the region of the paths of possibly present bubbles in such a manner that at least a share of the bubbles can push against it,

b) the analysing electronics unit (9) comprises means for filtering analysing and/or counting individual sound pulses which are produced as a result of the impact of the bubbles against the obstacle (2).

5. A device as claimed in claim 4, characterised in that the obstacle (2) comprises one or more wires (6).

6. A device as claimed in claim 5, characterised in that the wires (6) are bent so as to be meander-shaped and are approximately in a plane at right-angles to the flow direction of the bubbles.

7. A device as claimed in claim 4, characterised in that the obstacle (2) comprises a grid (7) which is arranged in a plane approximately at right-angles to the flow direction.

8. A device as claimed in one of claims 4 to 7, for bubbles which move in pipelines or containers, characterised by the following features :

a) the sound receiver is arranged outside the pipeline (1) or the container,

b) a coupling piece (3) of a sound-conducting material connects the sound receiver to the obstacle (2),

c) the coupling piece (3) leads through a seal (5) in the container or pipe wall (1).

9. A device as claimed in claim 8, characterised in that the obstacle is connected to the pipeline (1) at several points (14) and comprises an austenitic steel.

10. A device as claimed in one of the preceding claims 4 to 9, characterised in that the inherent frequency of the obstacle (2) lies in the low-frequency range and the obstacle (2) is designed to be such that the sound of a bubble can only reach the sound receiver (4) on one path.

11. A device as claimed in one of claims 4 to 10, characterised in that the analysing electronics unit (9) comprises a consecutively switched amplifier (10), frequency filter (11), analysing (12) and display apparatus (13).

**Revendications**

1. Procédé de détection acoustique de bulles se déplaçant dans un liquide, en utilisant un objet conducteur du son, disposé dans le liquide et couplé à un capteur acoustique (4) et en traitant les signaux du capteur acoustique dans une électronique d'exploitation (9), caractérisé en ce qu'il consiste :

a) à disposer l'objet conducteur du son dans le liquide, à titre d'obstacle (2), dans la région des trajets de bulles éventuellement présentes,

b) à produire, par le choc de chaque bulle individuelle sur l'obstacle (2), une impulsion acoustique caractéristique qui produit, dans le capteur acoustique (4), un signal électrique,

c) à analyser, suivant le spectre de fréquences et/ou l'amplitude et/ou à compter les signaux du capteur acoustique (4) par une électronique d'exploitation (9).

2. Procédé suivant la revendication 1, caractérisé en ce qu'il consiste à séparer, par un filtre (11) sélectif en fréquence, les signaux du capteur acoustique (4) produits par les bulles, des signaux produits par d'autres bruits, et à exploiter les signaux des fréquences spécifiques aux bulles en fonction de leur forme d'impulsion, de leur hauteur d'impulsion et de leur fréquence d'apparition.

3. Procédé suivant la revendication 1, caractérisé en ce qu'il consiste à moduler les signaux produits et à les rendre audibles à l'oreille humaine.

4. Dispositif de détection de bulles se déplaçant dans un liquide, comprenant un objet conducteur du son, disposé dans le liquide et couplé acoustiquement à un détecteur acoustique (4), et une électronique d'exploitation (9) de traitement des signaux du capteur acoustique, remarquable par les caractéristiques suivantes :

a) l'objet conducteur du son est agencé en obstacle et est disposé dans la région des trajets des bulles éventuellement présentes, de manière à ce qu'au moins une partie des bulles puissent le heurter,

b) l'électronique d'exploitation (9) comporte des moyens de filtrage, d'analyse et/ou de comptage des impulsions acoustiques individuelles produites par le choc des bulles sur l'obstacle (2).

5. Dispositif suivant la revendication 4, caractérisé en ce que l'obstacle (2) est constitué d'un ou de plusieurs fils métalliques (6).

6. Dispositif suivant la revendication 5, caractérisé en ce que les fils métalliques (6) sont recourbés en méandres et se trouvent sensiblement dans un plan perpendiculaire à la direction d'écoulement des bulles.

7. Dispositif suivant la revendication 4, caractérisé en ce que l'obstacle (2) est constitué d'une grille (7) qui est disposée dans un plan sensiblement perpendiculaire à la direction d'écoulement.

8. Dispositif suivant l'une des revendications 4 à 7, pour des bulles se déplaçant dans des canalisations ou dans des récipients, remarquable par les caractéristiques suivants :

a) le détecteur acoustique est monté à l'extérieur de la canalisation (1) ou du récipient,

b) une pièce d'accouplement (3) en matière conduisant le son relie le détecteur acoustique à l'obstacle (2),

c) la pièce d'accouplement (3) passe à travers une garniture (5) dans la paroi du récipient ou de la canalisation (1).

9. Dispositif suivant la revendication 8, caractérisé en ce que l'obstacle est relié en plusieurs emplacements (14) à la canalisation (1) et est en acier austénitique.

10. Dispositif suivant l'une des revendications 4 à 9, caractérisé en ce que la fréquence propre de l'obstacle (2) est dans le domaine des basses fréquences et l'obstacle (2) est conformé de manière que le son d'une bulle ne puisse parvenir au détecteur acoustique (4) que par une seule voie.

11. Dispositif suivant l'une des revendications 4 à 10, caractérisé en ce que l'électronique d'exploitation (9) est constituée d'un amplificateur (10), d'un filtre de fréquence (11), d'un appareil d'exploitation (12) et d'un appareil d'affichage (13) montés en série.

FIG 1

FIG 2

FIG 3

FIG 4

FIG 5